(19) Europäisches Patentamt / European Patent Office / Office européen des brevets

(11) EP 4 400 212 B1

(12) EUROPEAN PATENT SPECIFICATION

(45) Date of publication and mention of the grant of the patent: **25.02.2026 Bulletin 2026/09**

(21) Application number: **22867675.5**

(22) Date of filing: **06.09.2022**

(51) International Patent Classification (IPC):
***B01J 27/26*** $^{(2006.01)}$ ***C08G 64/20*** $^{(2006.01)}$
***C08G 64/34*** $^{(2006.01)}$ ***B01J 37/00*** $^{(2006.01)}$
***B01J 37/06*** $^{(2006.01)}$ ***B01J 37/08*** $^{(2006.01)}$
***B01J 27/138*** $^{(2006.01)}$ ***B01J 31/02*** $^{(2006.01)}$
***B01J 31/26*** $^{(2006.01)}$ ***B01J 23/80*** $^{(2006.01)}$
***B01J 37/03*** $^{(2006.01)}$ ***B01J 37/04*** $^{(2006.01)}$

(52) Cooperative Patent Classification (CPC):
**C08G 64/34; B01J 23/80; B01J 31/0202; B01J 31/26; B01J 37/031; B01J 37/04**

(86) International application number:
**PCT/KR2022/013375**

(87) International publication number:
**WO 2023/038406 (16.03.2023 Gazette 2023/11)**

(54) **DOUBLE METAL CYANIDE CATALYST, METHOD FOR PREPARING SAME AND METHOD FOR PREPARING POLYALKYLENE CARBONATE USING THE CATALYST**

DOPPELMETALLCYANIDKATALYSATOR, VERFAHREN ZU DESSEN HERSTELLUNG UND VERFAHREN ZUR HERSTELLUNG VON POLYALKYLENCARBONAT UNTER VERWENDUNG DES KATALYSATORS

CATALYSEUR AU CYANURE MÉTALLIQUE DOUBLE, SON PROCÉDÉ DE PRÉPARATION ET PROCÉDÉ DE PRÉPARATION DE CARBONATE DE POLYALKYLÈNE UTILISANT CE CATALYSEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.09.2021 KR 20210119702**

(43) Date of publication of application:
**17.07.2024 Bulletin 2024/29**

(73) Proprietor: **LG Chem, Ltd.**
**Yeongdeungpo-gu**
**Seoul 07336 (KR)**

(72) Inventors:
- **LEE, Seung Hee**
  **Daejeon 34122 (KR)**
- **KIM, Sang Woo**
  **Daejeon 34122 (KR)**
- **KIM, Sang Kook**
  **Daejeon 34122 (KR)**
- **SHIN, Bo Ra**
  **Daejeon 34122 (KR)**
- **PARK, No Jin**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 4 273 183**
**CN-A- 107 868 239**
**KR-A- 20040 029 087**
**KR-A- 20190 123 759**
**KR-B1- 101 640 557**
**US-A1- 2013 184 432**
**US-A1- 2016 152 651**
**US-A1- 2020 062 898**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- WU LI-CHUAN, YU AI-FANG, ZHANG MIN, LIU BAO-HUA, CHEN LI-BAN: "DMC catalyzed epoxide polymerization: Induction period, kinetics, and mechanism", JOURNAL OF APPLIED POLYMER SCIENCE, JOHN WILEY & SONS, INC., US, vol. 92, no. 2, 15 April 2004 (2004-04-15), US , pages 1302 - 1309, XP093045432, ISSN: 0021-8995, DOI: 10.1002/app.20089

## Description

### TECHNICAL FIELD

The present invention relates to a double metal cyanide catalyst which has high catalyst activity and is capable of increasing the ratio of a repeating unit including carbon dioxide in polyalkylene carbonate prepared, a method for preparing same and a method for preparing polyalkylene carbonate using the catalyst.

### BACKGROUND ART

After industrial revolution, humanity consumes a large amount of fossil fuels to build a modern society but increases the concentration of carbon dioxide in the air by environmental destruction including deforestation. In the way that the increase of the concentration of carbon dioxide becomes a factor of increasing the greenhouse effect, it is important to reduce the concentration in the air of carbon dioxide which has high contribution to global warming, and various researches on the emission regulation and immobilization of carbon dioxide are being conducted.
Recently, a polyalkylene carbonate resin from the polymerization of carbon dioxide and epoxide is in the spotlight as a biodegradable resin. Particularly, a process for preparing a polyalkylene carbonate resin using carbon dioxide may reduce the global warming problems in terms of immobilizing the carbon dioxide in the air and is also actively studied in terms of using as a carbon source.
In order to prepare a polyalkylene carbonate resin, a catalyst is surely required as well as carbon dioxide and epoxide, and as a typical heterogeneous catalyst, a double metal cyanide catalyst composed of a zinc dicarboxylate-based catalyst such as a zinc glutarate catalyst combined with dicarboxylic acid, and a complex of Co, Zn, Al, or the like, is being used.
In the case of the zinc glutarate catalyst, there are advantages of easy synthesis and treatment, but the activity of the catalyst is very low to increase the amount used of the catalyst, and the removal of the catalyst after polymerization reaction is difficult. On the contrary, in the case of the double metal cyanide catalyst, there are problems in that the activity is high, but the ratio of a repeating unit including carbon dioxide in a polyalkylene carbonate resin polymerized is low.
Accordingly, the development of a catalyst showing high catalyst activity and improved immobilizing efficiency of carbon dioxide, simultaneously, and being capable of polymerizing polyalkylene carbonate stably and improving the ratio of a repeating unit including carbon dioxide in polyalkylene carbonate polymerized, is required.

[Prior Art Document]

(Patent Document) KR 10-2013-0102588 A (2013. 09. 17)
US 2016/152651 and US 2013/184432 A1 disclose double metal cyanide catalysts for the preparation of polyalkylene carbonate, wherein the complexing agent is a monoalcohol, respectively an unsaturated monoalcohol.

### DISCLOSURE OF THE INVENTION

### TECHNICAL PROBLEM

The present invention is to solve the above-described problems and provides a double metal cyanide catalyst that may improve the activity of a catalyst to stably polymerize polyalkylene carbonate and may improve the ratio of a repeating unit including carbon dioxide in polyalkylene carbonate polymerized, a method for preparing same and a method for preparing polyalkylene carbonate using the catalyst.

### TECHNICAL SOLUTION

In order to solve the above-described tasks, the present invention provides a double metal cyanide catalyst, a method for preparing same and a method for preparing polyalkylene carbonate using the catalyst.

(1) The present invention provides a double metal cyanide catalyst comprising a double metal cyanide compound and a complexing agent, wherein the complexing agent is a compound represented by the following Formula 1:

[Formula 1]

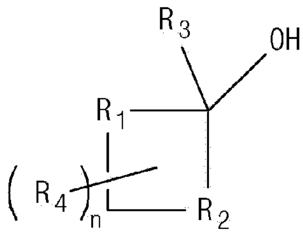

in Formula 1,
$R_1$ and $R_2$ are each independently a single bond or an alkylene group of 1 to 5 carbon atoms, where at least one among $R_1$ and $R_2$ is an alkylene group of 1 to 5 carbon atoms, $R_3$ and $R_4$ are each independently a hydrogen atom or an alkyl group of 1 to 6 carbon atoms, and n is an integer of 0 to 2.

(2) The present invention provides the double metal cyanide catalyst according to (1), wherein, in Formula 1, $R_1$ and $R_2$ are each independently a single bond or an alkylene group of 1 to 3 carbon atoms, where at least one among $R_1$ and $R_2$ is an alkylene group of 1 to 3 carbon atoms, $R_3$ and $R_4$ are each independently a hydrogen atom or an alkyl group of 1 to 4 carbon atoms, and n is an integer of 0 to 2.

(3) The present invention provides the double metal cyanide catalyst according to (1) or (2), wherein the compound represented by Formula 1 is any one or more selected from the group consisting of cyclobutanol, cyclopentanol, cyclohexanol, cycloheptanol, cyclooctanol, 1-methyl cyclopentanol, 2-methyl cyclopentanol, 3-methyl cyclopentanol, 1-ethyl cyclopentanol, 2-ethyl cyclopentanol, 3-ethyl cyclopentanol, 1-propyl cylopentanol, 2-propyl cyclopentanol, 3-propyl cyclopentanol, 1-butyl cyclopentanol, 2-butyl cyclopentanol, 3-butyl cyclopentanol, 1-isopropyl cyclopentanol, 2-isopropyl cyclopentanol, 3-isopropyl cyclopentanol, 1-(propan-2-yl) cyclopentanol, 2,2-dimethyl cyclopentanol, 2,3-dimethyl cyclopentanol, 3,3-dimethyl cyclopentanol, 1,2-dimethyl cyclopentanol, 1,3-dimethyl cyclopentanol, 1-methyl cyclohexanol, 1-ethyl cyclohexanol, 1-propyl cyclohexanol, 1-butyl cylohexanol, 2-methyl-1-cyclohexanol, 2-ethyl-1-cyclohexanol, 3-ethyl-1-cyclohexanol, 4-ethyl-1-cyclohexanol, 2-propy-1-cyclohexanol, 3-propyl-1-cyclohexanol, 4-propyl-1-cyclohexanol, 2-butyl-1-cyclohexanol, 3-butyl-1-cyclohexanol, 4-butyl-1-cyclohexanol, 2-isopropyl-1-cyclohexanol, 3-isopropyl-1-cyclohexanol, 4-isopropyl-1-cyclohexanol, 2-tert-butyl-1-cyclohexanol, 3-tert-butyl-1-cyclohexanol, 4-tert-butyl-1-cyclohexanol, 2,3-dimethyl-1-cyclohexanol, 2,4-dimethyl-1-cyclohexanol, 3,4-dimethyl-1-cyclohexanol, 1-methyl cycloheptanol, 2-methyl cycloheptanol, 3-mehtyl cycloheptanol and 4-methy cycloheptanol.

(4) The present invention provides the double metal cyanide catalyst according to any one of (1) to (3), wherein the double metal cyanide compound is derived from a metal cyanide complex and a metal salt.

(5) The present invention provides the double metal cyanide catalyst according to (4), wherein the metal cyanide complex is potassium hexacyanocobaltate(III), potassium hexacyanoferrate(II), potassium hexacyanoferrate(III), calcium hexacyanoferrate(III) or lithium hexacyanoiridate (III).

(6) The present invention provides the double metal cyanide catalyst according to (4) or (5), wherein the metal cyanide complex is potassium hexacyanocobaltate(III).

(7) The present invention provides the double metal cyanide catalyst according to (4), wherein the metal salt is one or more selected from the group consisting of zinc(II) chloride, zinc(III) chloride, zinc bromide, zinc iodide, zinc acetate, zinc acetylacetonate, zinc benzoate, zinc nitrate, iron(II) sulfate, iron(II) bromide, cobalt(II) chloride, cobalt(II) thiocyanate, nickel(II) formate and nickel(II) nitrate.

(8) The present invention provides the double metal cyanide catalyst according to (4) or (7), wherein the metal salt is zinc(II) chloride, zinc(III) chloride, zinc bromide or zinc iodide.

(9) The present invention provides the double metal cyanide catalyst according to any one of (1) to (8), further comprising an auxiliary complexing agent, wherein the auxiliary complexing agent is a compound having a hydroxyl group, an amine group, an ester group or an ether group at a terminal.

(10) The present invention provides the double metal cyanide catalyst according to (9), wherein the auxiliary complexing agent comprises a compound prepared by ring-opening polymerization of a cyclic ether compound, an epoxy polymer or an oxetane polymer.

(11) The present invention provides a method for preparing a double metal cyanide catalyst, comprising: (a) a step of reacting a metal salt aqueous solution comprising a complexing agent and a metal cyanide complex aqueous solution; (b) a step of separating a precipitate from a suspension obtained in step (a); (c) a step of washing the precipitate with the complexing agent; and (d) a step of drying the precipitate obtained in step (C) at a temperature of 20°C to 180°C, wherein the complexing agent is a compound represented by the following Formula 1:

[Formula 1]

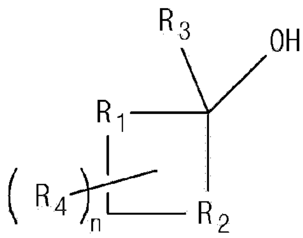

in Formula 1,

$R_1$ and $R_2$ are each independently a single bond or an alkylene group of 1 to 5 carbon atoms, where at least one among $R_1$ and $R_2$ is an alkylene group of 1 to 5 carbon atoms,
$R_3$ and $R_4$ are each independently a hydrogen atom or an alkyl group of 1 to 6 carbon atoms, and
n is an integer of 0 to 2.

(12) The present invention provides the method for preparing a double metal cyanide catalyst according to (11), wherein the reaction in step (a) is performed by further using an auxiliary complexing agent, and the auxiliary complexing agent is a compound having a hydroxyl group, an amine group, an ester group or an ether group at a terminal.
(13) The present invention provides a method for preparing polyalkylene carbonate, comprising a step of polymerizing an epoxide compound and carbon dioxide in the presence of the double metal cyanide catalyst according to any one of (1) to (10).
(14) The present invention provides the method for preparing polyalkylene carbonate according to (13), wherein the polymerization is performed at a temperature of 50°C to 120°C.

## ADVANTAGEOUS EFFECTS

The present invention utilizes a compound represented by Formula 1 as a complexing agent to show higher immobilizing effects of carbon dioxide in contrast to the conventional double metal cyanide catalyst. As a result, the ratio of a repeating unit including carbon dioxide in polyalkylene carbonate polymerized may be markedly improved, and it may be useful to apply to a technical field on reducing carbon dioxide. In addition, the equal level or higher activity may be shown in contrast to the conventional double metal cyanide catalyst, and polyalkylene carbonate may be stably polymerized.

## BEST MODE FOR CARRYING OUT THE INVENTION

It will be understood that words or terms used in the description and claims of the present invention shall not be interpreted as the meaning defined in commonly used dictionaries. It will be understood that the words or terms should be interpreted as having a meaning that is consistent with their meaning in the technical idea of the invention, based on the principle that an inventor may properly define the meaning of the words to best explain the invention.
The inventors of the present invention repeated research on a catalyst showing the equal or higher activity in contrast to the conventional double metal cyanide catalyst and improving the ratio of a repeating unit including carbon dioxide in polyalkylene carbonate, and found that high catalyst activity may be shown, and at the same time, the ratio of a repeating unit including carbon dioxide in polyalkylene carbonate prepared by using the catalyst may be improved in the case of using a compound represented by Formula 1 instead of tert-butanol that has been used as the conventional complexing agent, to complete the present invention.
Hereinafter, the present invention will be explained in detail.

### Double metal cyanide catalyst

The present invention provides a double metal cyanide catalyst having excellent catalyst activity and being capable of preparing polyalkylene carbonate having high immobilizing efficiency of carbon dioxide.
The double metal cyanide catalyst according to an embodiment of the present invention comprises a double metal cyanide compound and a complexing agent, wherein the complexing agent is characterized in being a compound represented by Formula 1.

[Formula 1]

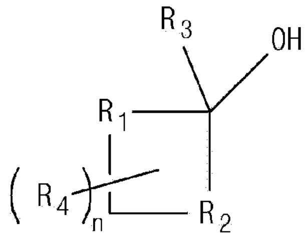

In Formula 1,
$R_1$ and $R_2$ are each independently a single bond or an alkylene group of 1 to 5 carbon atoms, where at least one among $R_1$ and $R_2$ is an alkylene group of 1 to 5 carbon atoms, $R_3$ and $R_4$ are each independently a hydrogen atom or an alkyl group of 1 to 6 carbon atoms, and n is an integer of 0 to 2.

Particularly, in Formula 1, $R_1$ and $R_2$ may be each independently a single bond or an alkylene group of 1 to 3 carbon atoms, where at least one among $R_1$ and $R_2$ is an alkylene group of 1 to 3 carbon atoms, $R_3$ and $R_4$ may be each independently a hydrogen atom or an alkyl group of 1 to 4 carbon atoms, and n may be an integer of 0 to 2.

In another embodiment, in Formula 1, $R_1$ and $R_2$ may be each independently a single bond or an alkylene group of 1 to 3 carbon atoms, where at least one among $R_1$ and $R_2$ is an alkylene group of 1 to 3 carbon atoms, $R_3$ may be a hydrogen atom, and n may be 0.

In another embodiment, the complexing agent may be a cycloalkyl alcohol of 3 to 12 carbon atoms, particularly, a cycloalkyl alcohol of 4 to 10 carbon atoms or 5 to 7 carbon atoms.

In another embodiment, the compound represented by Formula 1 may be any one or more selected from the group consisting of cyclobutanol, cyclopentanol, cyclohexanol, cycloheptanol, cyclooctanol, 1-methyl cyclopentanol, 2-methyl cyclopentanol, 3-methyl cyclopentanol, 1-ethyl cyclopentanol, 2-ethyl cyclopentanol, 3-ethyl cyclopentanol, 1-propyl cylopentanol, 2-propyl cyclopentanol, 3-propyl cyclopentanol, 1-butyl cyclopentanol, 2-butyl cyclopentanol, 3-butyl cyclopentanol, 1-isopropyl cyclopentanol, 2-isopropyl cyclopentanol, 3-isopropyl cyclopentanol, 1-(propan-2-yl) cyclopentanol, 2,2-dimethyl cyclopentanol, 2,3-dimethyl cyclopentanol, 3,3-dimethyl cyclopentanol, 1,2-dimethyl cyclopentanol, 1,3-dimethyl cyclopentanol, 1-methyl cyclohexanol, 1-ethyl cyclohexanol, 1-propyl cyclohexanol, 1-butyl cylohexanol, 2-methyl-1-cyclohexanol, 2-ethyl-1-cyclohexanol, 3-ethyl-1-cyclohexanol, 4-ethyl-1-cyclohexanol, 2-propy-1-cyclohexanol, 3-propyl-1-cyclohexanol, 4-propyl-1-cyclohexanol, 2-butyl-1-cyclohexanol, 3-butyl-1-cyclohexanol, 4-butyl-1-cyclohexanol, 2-isopropyl-1-cyclohexanol, 3-isopropyl-1-cyclohexanol, 4-isopropyl-1-cyclohexanol, 2-tert-butyl-1-cyclohexanol, 3-tert-butyl-1-cyclohexanol, 4-tert-butyl-1-cyclohexanol, 2,3-dimethyl-1-cyclohexanol, 2,4-dimethyl-1-cyclohexanol, 3,4-dimethyl-1-cyclohexanol, 1-methyl cycloheptanol, 2-methyl cycloheptanol, 3-mehtyl cycloheptanol and 4-methy cycloheptanol.

In another embodiment, the compound represented by Formula 1 may be any one or more selected from the group consisting of cyclobutanol, cyclopentanol, cyclohexanol, cycloheptanol and cyclooctanol.

Generally, a double metal cyanide catalyst is prepared using a complexing agent, and in this case, the complexing agent is required to react with a metal cyanide complex easily, and the complexing agent is mostly an organic compound including a heteroatom and easily dissolved in water. Examples of such a complexing agent include alcohols, aldehydes, ketones, ethers, esters, amides, urea, nitriles, or sulfates. Among them, ethanol, isopropanol, n-butanol, iso-butanol, sec-butanol, or tert-butanol are alcohols easily dissolved in water and are widely used as complexing agents. Among them, tert-butanol is the most widely used one for preparing a double metal cyanide catalyst.

However, a double metal cyanide catalyst prepared using tert-butanol as a complexing agent generally has an amorphous crystal structure, and in case of polymerizing a polyalkylene carbonate resin under such a catalyst, there are problems in that the ring-opening reaction of an epoxide compound may be excessively carried out, and the ratio of a repeating unit including carbon dioxide in polyalkylene carbonate resin thus polymerized is low.

In another embodiment, in order to increase the ratio of a repeating unit including carbon dioxide in a polymer obtained by the copolymerization of alkylene oxide and carbon dioxide, a double metal cyanide catalyst including an unsaturated alcohol of C2 to C20, that may have a cycloalkyl group as a complexing ligand, has been developed and used as the copolymerization catalyst, but the improvement of the ratio of the repeating unit including carbon dioxide in the polymer thus prepared was insignificant. In another embodiment, a double metal cyanide catalyst including a cyclic polyol as a complexing agent in the copolymerization has been used, but in this case, due to the high melting point of the cyclic polyol, the double metal cyanide catalyst has a solid state at room temperature and could not be used as a sole complexing agent. Accordingly, there are problems of essentially requiring another complexing agent such as tert-butanediol, and there are problems in that the ratio of the repeating unit including carbon dioxide in the polymer thus prepared is still not high.

However, the double metal cyanide catalyst of the present invention is prepared by using a cycloalkane-type alcohol having a bulky structure as the complexing agent, and the crystal structure of the catalyst may be diverse including cubic, amorphous and monoclinic, and accordingly, effects of suitably controlling the reaction rate of an epoxide compound and carbon dioxide could be shown.

Particularly, the double metal cyanide compound according to an embodiment of the present invention may be derived from a metal cyanide complex and a metal salt.

The metal cyanide complex may show water-soluble properties. Particularly, the metal cyanide complex may be represented by Formula 2.

[Formula 2] $Y_aM'(CN)_b(A)_C$

In Formula 2, M' may be one or more selected from the group consisting of Fe(II), Fe(III), Co(II), Co(III), Cr(II), Cr(III), Mn(II), Mn(III), Ir(III), Ni(II), Rh(III), Ru(II), V(V) and V(IV), preferably, one or more selected from the group consisting of Co(II), Co(III), Fe(II), Fe(III), Cr(III), Ir(III) and Ni(II). Y may be an alkali metal ion or an alkaline earth metal ion, A may be an anion selected from halide, hydroxide, sulfate, carbonate, cyanide, oxalate, thiocyanate, isocyanate, isothiocyanate, carboxylate and nitrate. a and b are integers of 1 or more, and the sum of the charges of a, b and c may make balance with the charge of M'.

For example, the metal cyanide complex represented by Formula 2 may be potassium hexacyanocobaltate(III), potassium hexacyanoferrate(II), potassium hexacyanoferrate(III), calcium hexacyanoferrate(III) or lithium hexacyanoiridate(III), preferably, potassium hexacyanocobaltate(III).

The metal salt may show water-soluble properties. Particularly, the metal salt may be represented by Formula 3.

[Formula 3] $M(X)_n$

In Formula 3, M is a transition metal, preferably, one or more selected from the group consisting of Zn(II), Fe(II), Ni(II), Mn(II), Co(II), Sn(II), Pb(II), Fe(III), Mo(IV), Mo(VI), Al(III), V(V), V(IV), Sr(II), W(IV), W(VI), Cu(II) and Cr(III), more preferably, one or more selected from the group consisting of Zn(II), Fe(II), Co(II) and Ni(II). X is an anion selected from halide, hydroxide, sulfate, carbonate, cyanide, oxalate, thiocyanate, isocyanate, isothiocyanate, carboxylate and nitrate. The value of N satisfies the valence state of M. For example, the metal salt represented by Formula 2 may be zinc(II) chloride, zinc(III) chloride, zinc bromide, zinc iodide, zinc acetate, zinc acetylacetonate, zinc benzoate, zinc nitrate, iron(II) sulfate, iron(II) bromide, cobalt(II) chloride, cobalt(II) thiocyanate, nickel(II) formate, nickel(II) nitrate and mixtures thereof, preferably, zinc(II) chloride, zinc(III) chloride, zinc bromide or zinc iodide.

The double metal cyanide catalyst according to the present invention may be represented by Formula 4.

[Formula 4] $M^2[M^1(CN)_p]_q \cdot dM^2(X)_r \cdot eL \cdot fH_2O$

In Formula 4, $M^1$ and $M^2$ are each independently a transition metal, X is an anion, and L is cyclobutanol, cyclopentanol, cyclohexanol, cycloheptanol, or cyclooctanol. d, e, f, p, q and r are positive numbers.

More particularly, the double metal cyanide catalyst according to the present invention may be represented by Formula 5.

[Formula 5] $Zn_3[Co(CN)_6]_2 \cdot gZnCl_2 \cdot hL \cdot iH_2O$

In Formula 5, L is cyclobutanol, cyclopentanol, cyclohexanol, cycloheptanol, or cyclooctanol, and g, h and i are positive numbers.

The double metal cyanide catalyst of the present invention may further include an auxiliary complexing agent, and the auxiliary complexing agent may be a compound having a hydroxyl group, an amine group, an ester group, or an ether group at a terminal.

The auxiliary complexing agent may play the role of improving the activity of the double metal cyanide catalyst even further. The auxiliary complexing agent may be a compound prepared by the ring-opening polymerization of a cyclic ether compound, an epoxy polymer or an oxetane polymer, for example, one or more selected from the group consisting of polyether, polyester, polycarbonate, polyalkylene glycol, polyalkylene glycol sorbitan ester, polyalkylene glycol glycidyl ether, polyacrylamide, poly(acrylamide-co-acrylic acid), polyacrylic acid, poly(acrylic acid-co-maleic acid), polyacrylonitrile, polyalkyl acrylate, polyalkyl methacrylate, polyvinyl methyl ether, polyvinyl ethyl ether, polyvinyl acetate, polyvinyl alcohol, poly-N-vinylpyrrolidone, poly(N-vinylpyrrolidone-co-acrylic acid), polyvinyl methyl ketone, poly(4-vinylphenol), poly(acrylic acid-co-styrene), an oxazoline polymer, polyalkyleneimine, maleic acid, a maleic anhydride copolymer, hydroxyethyl cellulose, polyacetal, glycidyl ether, glycoside, carboxylic ester of polyhydric alcohols, gallic acid, ester and amide.

**Method for preparing double metal cyanide catalyst**

The present invention provides a method for preparing the double metal cyanide catalyst.

The method for preparing the double metal cyanide catalyst according to an embodiment of the present invention is characterized in including: (a) a step of reacting a metal salt aqueous solution comprising a complexing agent and a metal cyanide complex aqueous solution; (b) a step of separating a precipitate from a suspension obtained in step (a); (c) a step of washing the precipitate with the complexing agent; and (d) a step of drying the precipitate obtained in step (C) at a temperature of 20°C to 180°C, wherein the complexing agent is a compound represented by Formula 1.

Here, the complexing agent, the metal salt, and the metal cyanide complex are the same as described above.

Hereinafter, each step will be explained in particular.

*Step (a)*

Step (a) is a step of preparing a suspension containing a metal salt, a metal cyanide complex and a double metal cyanide compound, and may be performed by reacting a metal salt aqueous solution containing a complexing agent and a metal cyanide complex aqueous solution. Particularly, step (a) may be performed by adding a metal cyanide complex aqueous solution to a mixture of a complexing agent and a metal salt aqueous solution, and then, reacting.

In addition, the reaction in step (a) may be carried out by further using an auxiliary complexing agent, and in this case, a metal salt aqueous solution including a complexing agent and a metal cyanide complex aqueous solution may be injected together with the auxiliary complexing agent, or a metal cyanide complex aqueous solution may be injected to a metal salt aqueous solution including a complexing agent and then, the complexing agent may be injected.

*Step (b)*

Step (b) is a step of obtaining the double metal cyanide compound of a solid from the suspension prepared in step (a), and a double metal cyanide compound of a solid could be obtained by separating a precipitate by centrifuging or filtering the suspension obtained in step (a).

*Step (c)*

Step (c) is a step of washing the precipitate obtained in step (b), and the precipitate may be washed with an aqueous solution containing a complexing agent to remove secondary products (by-products) attached to the precipitate. The washing process of step (c) may be performed once, but may preferably be performed three times or more to increase the removing efficiency of the secondary products attached to the precipitate.

*Step (d)*

Step (d) is a step of preparing a double metal cyanide catalyst and may be performed by drying the precipitate washed in step (c) at a temperature of 20°C to 180°C. More particularly, in step (d), a double metal cyanide catalyst may be obtained by drying in a vacuum oven of a temperature of 40°C to 160°C under pressure conditions of 0.1 mbar to 1013 mbar.

**Method for preparing polyalkylene carbonate**

The present invention provides a method for preparing polyalkylene carbonate, including a step of polymerizing an epoxide compound with carbon dioxide in the presence of the above-described double metal cyanide catalyst.

The polymerization method is not specifically limited, but may preferably be performed by solution polymerization. By the solution polymerization, the heat of reaction may be suitably controlled, and the weight average molecular weight or viscosity of polyalkylene carbonate to be obtained may be easily controlled. More particularly, by the solution polymerization, polymerization reaction may be performed at a temperature of 50°C to 120°C, preferably, at a temperature of 60°C to 120°C, in conditions of 15 bar to 50 bar for 1 hour to 40 hours.

The epoxide compound may use one or more compounds selected from the group consisting of alkylene oxide of 2 to 20 carbon atoms unsubstituted or substituted with halogen or an alkyl group of 1 to 5 carbon atoms; cycloalkylene oxide of 4 to 20 carbon atoms unsubstituted or substituted with halogen or an alkyl group of 1 to 5 carbon atoms; and styrene oxide of 8 to 20 carbon atoms unsubstituted or substituted with halogen or an alkyl group of 1 to 5 carbon atoms, for example, one or more compounds selected from the group consisting of ethylene oxide, propylene oxide, butene oxide, pentene oxide, hexene oxide, octene oxide, decene oxide, dodecane oxide, tetradecane oxide, hexadecane oxide, octadecene oxide, butadiene monoxide, 1,2-epoxy-7-octene, epifluorohydrin, epichlorohydrin, epibromohydrin, isopropyl

glycidyl ether, butyl glycidyl ether, t-butyl glycidyl ether, 2-ethylhexyl glycidyl ether, allyl glycidyl ether, cyclopentene oxide, cyclohexene oxide, cyclooctene oxide, cyclododecene oxide, alpha-pinene oxide, 2,3-epoxynorbornene, limonene oxide, dieldrin, 2,3-epoxypropylbenzene, styrene oxide, phenylpropylene oxide, stilbene oxide, chlorostilbene oxide, dichlorostilbene oxide, 1,2-epoxy-3-phenoxypropane, benzyloxymethyl oxirane, glycidyl-methylphenyl ether, chlorophenyl-2,3-epoxypropyl ether, epoxypropyl methoxyphenyl ether, biphenyl glycidyl ether and glycidyl naphthyl ether.

As the solvent, one or more selected from the group consisting of methylene chloride, ethylene dichloride, trichloroethane, tetrachloroethane, chloroform, acetonitrile, propionitrile, dimethylformamide, N-methyl-2-pyrrolidone, dimethylsulfoxide, nitromethane, 1,4-dioxane, hexane, toluene, tetrahydrofuran, methyl ethyl ketone, methyl amine ketone, methyl isobutyl ketone, acetone, cyclohexanone, trichloroethylene, methyl acetate, vinyl acetate, ethyl acetate, propyl acetate, butyrolactone, caprolactone, nitropropane, benzene, styrene, xylene, and methyl propasol, may be used, and preferably, polymerization reaction may be more effectively carried out by using methylene chloride as the solvent.

The solvent and the epoxide compound may be used in a weight ratio of 1:0.1 to 1:100, preferably, a weight ratio of 1:1 to 1:10. Within this range, the solvent may suitably act as a reaction medium, and accordingly, the productivity of polyalkylene carbonate may be improved, and effects of minimizing by-products produced during a preparation process may be achieved.

In addition, the double metal cyanide catalyst and the epoxide compound may be used in a weight ratio of 1:100 to 1:8000, preferably, 1:300 to 1:6000, more preferably, 1:1000 to 1:4000. Within this range, high catalyst activity may be shown while minimizing by-products, and effects of minimizing the back-biting phenomenon of polyalkylene carbonate prepared by heating may be achieved.

Hereinafter, the present invention will be explained in particular through particular embodiments. However, the embodiments below are only for illustrating the present invention, and the scope of the present invention is not limited thereby.

**Preparation of double metal cyanide catalyst**

**Example 1**

In a first beaker with a volume of 500 ml, 11.45 g of zinc chloride, 30 ml of distilled water and 39 g of cyclohexanol were mixed to prepare a first mixture solution. In a second beaker with a volume of 250 ml, 4 g of potassium hexacyanocobaltate was dissolved in 100 ml of distilled water to prepare a second mixture solution. By using a mechanical stirrer, the second mixture solution was added dropwisely to the first mixture solution at 25°C for 1 hour. Then, a mixture product was separated by using a high-speed centrifuge, and a precipitate separated was washed twice using a mixture of 70 ml of distilled water and 54 g of cyclohexanol. Then, additional washing was performed using 109 g of cyclohexanol, and the precipitate thus washed was dried in a vacuum oven of 80°C for 12 hours to finally obtained 5.9 g of a double metal cyanide catalyst.

**Example 2**

The same method as in Example 1 was performed except for using cycloheptanol instead of cyclohexanol as a complexing agent in Example 1 to finally obtain 5.3 g of a double metal cyanide catalyst.

**Example 3**

The same method as in Example 1 was performed except for using cyclopentanol instead of cyclohexanol as a complexing agent in Example 1 to finally obtain 5.7 g of a double metal cyanide catalyst.

**Example 4**

In a first beaker with a volume of 500 ml, 11.45 g of zinc chloride, 30 ml of distilled water and 39 g of cyclohexanol were mixed to prepare a first mixture solution. In a second beaker with a volume of 250 ml, 4 g of potassium hexacyanocobaltate was dissolved in 100 ml of distilled water to prepare a second mixture solution. In a third beaker with a volume of 100 ml, 5 g of polypropylene glycol (Mw = 3,000) and 23 g of cyclohexanol were dissolved in 2 ml of distilled water to prepare a third mixture solution. By using a mechanical stirrer, the second mixture solution was added dropwisely to the first mixture solution at 25°C for 1 hour, and the third mixture solution was injected at one time, followed by reacting for 1 hour. Then, a mixture product was separated by using a high-speed centrifuge, and a precipitate separated was washed twice using a mixture of 70 ml of distilled water and 54 g of cyclohexanol. Then, additional washing was performed using 109 g of cyclohexanol, and the precipitate thus washed was dried in a vacuum oven of 80°C for 12 hours to finally obtained 6.2 g of a double metal cyanide catalyst.

**Example 5**

The same method as in Example 4 was performed except for using cycloheptanol instead of cyclohexanol as a complexing agent in Example 4 to finally obtain 6.3 g of a double metal cyanide catalyst.

**Example 6**

The same method as in Example 4 was performed except for using cyclopentanol instead of cyclohexanol as a complexing agent in Example 4 to finally obtain 6.0 g of a double metal cyanide catalyst.

**Comparative Example 1**

The same method as in Example 1 was performed except for using tert-butanol instead of cyclohexanol as a complexing agent in Example 1 to finally obtain 6.1 g of a double metal cyanide catalyst.

**Comparative Example 2**

The same method as in Example 4 was performed except for using tert-butanol instead of cyclohexanol as a complexing agent in Example 4 to finally obtain 6.5 g of a double metal cyanide catalyst.

**Comparative Example 3**

The same method as in Example 4 was performed except for using 2-methyl-3-buten-2-ol instead of cyclohexanol as a complexing agent in Example 4 to finally obtain 6.5 g of a double metal cyanide catalyst.

**Comparative Example 4**

The same method as in Example 4 was performed except for using 1,5-cyclooctanediol instead of cyclohexanol as a complexing agent in Example 4 to finally obtain 6.5 g of a double metal cyanide catalyst.

**Preparation of polyalkylene carbonate**

**Example 7**

To a high-pressure reactor, 10 mg of the double metal cyanide catalyst prepared in Example 1, 20 g of propylene oxide and the same amount of a methylene chloride solvent as the propylene oxide were added. Then, carbon dioxide was injected into the reactor and a pressure of 30 bar was applied. Polymerization reaction was carried out at 105°C for 5 hours, and unreacted carbon dioxide was removed after finishing the reaction. Then, the product was diluted in 200 ml of a methylene chloride solvent, unreacted propylene oxide was removed using a vacuum evaporation method, and drying was performed in a vacuum oven of 40°C for 12 hours to finally obtain 25.5 g of polypropylene carbonate.

**Example 8**

The same method as in Example 7 was performed except for using the double metal cyanide catalyst prepared in Example 4 instead of the double metal cyanide catalyst prepared in Example 1, in Example 7 to finally obtain 23.2 g of polypropylene carbonate.

**Example 9**

The same method as in Example 7 was performed except for performing the polymerization reaction at 85°C instead of 105°C, in Example 7 to finally obtain 32.7 g of polypropylene carbonate.

**Example 10**

The same method as in Example 8 was performed except for performing the polymerization reaction at 85°C instead of 105°C, in Example 8 to finally obtain 30.5 g of polypropylene carbonate.

**Example 11**

The same method as in Example 9 was performed except for using the double metal cyanide catalyst prepared in Example 2 instead of the double metal cyanide catalyst prepared in Example 1, in Example 9 to finally obtain 31.3 g of polypropylene carbonate.

**Example 12**

The same method as in Example 9 was performed except for using the double metal cyanide catalyst prepared in Example 5 instead of the double metal cyanide catalyst prepared in Example 1, in Example 9 to finally obtain 32.1 g of polypropylene carbonate.

**Example 13**

The same method as in Example 9 was performed except for using the double metal cyanide catalyst prepared in Example 3 instead of the double metal cyanide catalyst prepared in Example 1, in Example 9 to finally obtain 30.9 g of polypropylene carbonate.

**Example 14**

The same method as in Example 9 was performed except for using the double metal cyanide catalyst prepared in Example 6 instead of the double metal cyanide catalyst prepared in Example 1, in Example 9 to finally obtain 30.7 g of polypropylene carbonate.

**Comparative Example 5**

The same method as in Example 7 was performed except for using the double metal cyanide catalyst prepared in Comparative Example 1 instead of the double metal cyanide catalyst prepared in Example 1, in Example 7 to finally obtain 24.7 g of polypropylene carbonate.

**Comparative Example 6**

The same method as in Example 7 was performed except for using the double metal cyanide catalyst prepared in Comparative Example 2 instead of the double metal cyanide catalyst prepared in Example 1, in Example 7 to finally obtain 23.2 g of polypropylene carbonate.

**Comparative Example 7**

The same method as in Comparative Example 5 was performed except for performing the polymerization reaction at 85°C instead of 105°C, in Comparative Example 5 to finally obtain 26.0 g of polypropylene carbonate.

**Comparative Example 8**

The same method as in Comparative Example 6 was performed except for performing the polymerization reaction at 85°C instead of 105°C, in Comparative Example 6 to finally obtain 23.6 g of polypropylene carbonate.

**Comparative Example 9**

The same method as in Comparative Example 8 was performed except for using the double metal cyanide catalyst prepared in Comparative Example 3 instead of the double metal cyanide catalyst prepared in Comparative Example 2, in Comparative Example 8 to finally obtain 24.1 g of polypropylene carbonate.

**Comparative Example 10**

The same method as in Comparative Example 9 was performed except for using the double metal cyanide catalyst prepared in Comparative Example 4 instead of the double metal cyanide catalyst prepared in Comparative Example 3, in Comparative Example 9. However, catalyst activity was not shown, and polypropylene carbonate was not obtained.

## Experimental Examples

Catalyst activity for Examples 7 to 14 and Comparative Examples 5 to 10 was measured and shown in Table 1 below. In addition, the mole% of each carbonate unit and the weight average molecular weight of each polypropylene carbonate obtained in Examples 7 to 14 and Comparative Examples 5 to 10 were measured and shown in Table 1 below.

* Catalyst activity (g-polymer/g-catalyst): The weight of polypropylene carbonate polymerized and the amount used of the catalyst were measured. By using the measured values, catalyst activity was calculated as in Equation 1 below.

Catalyst activity (g-polymer/g-catalyst) = weight of polypropylene carbonate polymerized (g)/ amount used of catalyst (g) [Equation 1]

* mole% of carbonate unit: By using $^1$H-NMR spectroscopy (500 MHz Spectrometer, Jeol Co.), a carbonate peak shown around 4.2 ppm and an ether peak shown around 3.2-3.9 ppm were measured. By using the measured values, the mole% of a carbonate unit was calculated as in Equation 2 below.

Mole% of carbonate unit = [(area of carbonate peak) / (area of carbonate peak + area of ether peak)] X 100 [Equation 2]

**[00146]** * Weight average molecular weight (g/mol): A weight average molecular weight was measured using gel permeation chromatography (GPC, Waters 1515 system, WATERS Corporation) under the conditions below.

- Column: Agilent PLgel MIXED-B
- Solvent: $CHCl_3$
- Flow rate: 1.0 ml/min
- Specimen concentration: 1.0 mg/ml
- Injection amount: 100 μl
- Column temperature: 40°C
- Detector: Waters 2414 Refractometer Detector
- Standard: Polystyrene (calibrated with a cubic function)
- Data processing: Empower

[Table 1]

| Division | Complexi ng agent | Auxil iary compl exing agent | Polym eriza tion tempe ratur e (°C) | Catalyst activity (g-polymer/ g-catalyst ) | Carb onat e unit (mol e%) | Weight average molecul ar weight (g/mol) |
|---|---|---|---|---|---|---|
| Example 7 | Cyclohex anol | - | 105 | 2,550 | 92 | 185,000 |
| Example 8 | Cyclohex anol | PPG1) | 105 | 2,320 | 92 | 197,000 |
| Example 9 | Cyclohex anol | - | 85 | 3,270 | 93 | 255,000 |
| Example 10 | Cyclohex anol | PPG | 85 | 3,050 | 93 | 272,000 |
| Example 11 | Cyclohep tanol | - | 85 | 3,130 | 94 | 242,000 |
| Example 12 | Cyclohep tanol | PPG | 85 | 3,210 | 93 | 239,100 |

(continued)

| Division | Complexi ng agent | Auxil iary compl exing agent | Polym eriza tion tempe ratur e (°C) | Catalyst activity (g-polymer/ g-catalyst ) | Carb onat e unit (mol e%) | Weight average molecul ar weight (g/mol) |
|---|---|---|---|---|---|---|
| Example 13 | Cyclopen tanol | - | 85 | 3,090 | 93 | 263, 600 |
| Example 14 | Cyclopen tanol | PPG | 85 | 3,070 | 94 | 222,080 |
| Comparative Example 5 | Tert-butanol | - | 105 | 2,470 | 33 | 170,000 |
| Comparative Example 6 | Tert-butanol | PPG | 105 | 2,320 | 38 | 172,000 |
| Comparative Example 7 | Tert-butanol | - | 85 | 2, 600 | 47 | 183,210 |
| Comparative Example 8 | Tert-butanol | PPG | 85 | 2,360 | 56 | 280,090 |
| Comparative Example 9 | 2-Methyl-3-buten-2-ol | PPG | 85 | 2,410 | 37 | 222,560 |
| Comparative Example 10 | 1,5-Cyclooct anediol | PPG | 85 | - | NA | NA |
| 1) PPG: polypropylene glycol | | | | | | |

As shown in Table 1, in the cases of Examples 7 to 14, using catalysts including the cycloalkane alcohol represented by Formula 1 of the present invention as a complexing agent, showed the equal or better catalyst activity in contrast to Comparative Examples 5 to 10, and it could be confirmed that the ratio of a repeating unit including carbon dioxide in polyalkylene carbonate polymerized was markedly increased.

Particularly, in the cases of Examples 7 to 14, using the catalysts of Example 1 to Example 6, prepared using cyclopentanol, cyclohexanol, or cycloheptanol as a complexing agent, showed better catalyst activity in contrast to Comparative Examples 5 to 8, using the catalysts of Comparative Examples 1 and 2, prepared using tert-butanol as a complexing agent and Comparative Example 9 using the catalyst of Comparative Example 3 prepared using 2-methyl-3-buten-2-ol as a complexing agent, and showed increased results of the molar ratio of a carbonate unit to 1.20 times to 2.85 times.

Through this, the catalyst according to the present invention is used for the preparation of polyalkylene carbonate, and it could be confirmed that high catalyst activity is shown, high immobilizing efficiency of carbon dioxide is achieved and effects of markedly increasing the ratio of a repeating unit including carbon dioxide in the polyalkylene carbonate prepared are achieved. In addition, because of the effects, it could be confirmed that the present invention could be more suitably used in a technical field of reducing carbon dioxide.

## Claims

**1.** A double metal cyanide catalyst comprising a double metal cyanide compound and a complexing agent, wherein

the complexing agent is a compound represented by the following Formula 1:

[Formula 1]

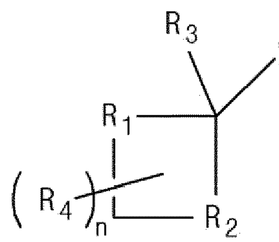

in Formula 1,
$R_1$ and $R_2$ are each independently a single bond or an alkylene group of 1 to 5 carbon atoms, where at least one

among $R_1$ and $R_2$ is an alkylene group of 1 to 5 carbon atoms,
$R_3$ and $R_4$ are each independently a hydrogen atom or an alkyl group of 1 to 6 carbon atoms, and
n is an integer of 0 to 2.

**2.** The double metal cyanide catalyst according to claim 1, wherein,

in Formula 1,
$R_1$ and $R_2$ are each independently a single bond or an alkylene group of 1 to 3 carbon atoms, where at least one among $R_1$ and $R_2$ is an alkylene group of 1 to 3 carbon atoms,
$R_3$ and $R_4$ are each independently a hydrogen atom or an alkyl group of 1 to 4 carbon atoms, and
n is an integer of 0 to 2.

**3.** The double metal cyanide catalyst according to claim 1, wherein the compound represented by Formula 1 is any one or more selected from the group consisting of cyclobutanol, cyclopentanol, cyclohexanol, cycloheptanol, cyclooctanol, 1-methyl cyclopentanol, 2-methyl cyclopentanol, 3-methyl cyclopentanol, 1-ethyl cyclopentanol, 2-ethyl cyclopentanol, 3-ethyl cyclopentanol, 1-propyl cylopentanol, 2-propyl cyclopentanol, 3-propyl cyclopentanol, 1-butyl cyclopentanol, 2-butyl cyclopentanol, 3-butyl cyclopentanol, 1-isopropyl cyclopentanol, 2-isopropyl cyclopentanol, 3-isopropyl cyclopentanol, 1-(propan-2-yl) cyclopentanol, 2,2-dimethyl cyclopentanol, 2,3-dimethyl cyclopentanol, 3,3-dimethyl cyclopentanol, 1,2-dimethyl cyclopentanol, 1,3-dimethyl cyclopentanol, 1-methyl cyclohexanol, 1-ethyl cyclohexanol, 1-propyl cyclohexanol, 1-butyl cylohexanol, 2-methyl-1-cyclohexanol, 2-ethyl-1-cyclohexanol, 3-ethyl-1-cyclohexanol, 4-ethyl-1-cyclohexanol, 2-propy-1-cyclohexanol, 3-propyl-1-cyclohexanol, 4-propyl-1-cyclohexanol, 2-butyl-1-cyclohexanol, 3-butyl-1-cyclohexanol, 4-butyl-1-cyclohexanol, 2-isopropyl-1-cyclohexanol, 3-isopropyl-1-cyclohexanol, 4-isopropyl-1-cyclohexanol, 2-tert-butyl-1-cyclohexanol, 3-tert-butyl-1-cyclohexanol, 4-tert-butyl-1-cyclohexanol, 2,3-dimethyl-1-cyclohexanol, 2,4-dimethyl-1-cyclohexanol, 3,4-dimethyl-1-cyclohexanol, 1-methyl cycloheptanol, 2-methyl cycloheptanol, 3-mehtyl cycloheptanol and 4-methy cycloheptanol.

**4.** The double metal cyanide catalyst according to claim 1, wherein the double metal cyanide compound is derived from a metal cyanide complex and a metal salt.

**5.** The double metal cyanide catalyst according to claim 4, wherein the metal cyanide complex is potassium hexacyanocobaltate(III), potassium hexacyanoferrate(II), potassium hexacyanoferrate(III), calcium hexacyanoferrate(III) or lithium hexacyanoiridate(III).

**6.** The double metal cyanide catalyst according to claim 4, wherein the metal cyanide complex is potassium hexacyanocobaltate(III).

**7.** The double metal cyanide catalyst according to claim 4, wherein the metal salt is one or more selected from the group consisting of zinc(II) chloride, zinc(III) chloride, zinc bromide, zinc iodide, zinc acetate, zinc acetylacetonate, zinc benzoate, zinc nitrate, iron(II) sulfate, iron(II) bromide, cobalt(II) chloride, cobalt(II) thiocyanate, nickel(II) formate and nickel(II) nitrate.

**8.** The double metal cyanide catalyst according to claim 4, wherein the metal salt is zinc(II) chloride, zinc(III) chloride, zinc bromide and zinc iodide.

**9.** The double metal cyanide catalyst according to claim 1, further comprising an auxiliary complexing agent, wherein the auxiliary complexing agent is a compound having a hydroxyl group, an amine group, an ester group or an ether group at a terminal.

**10.** The double metal cyanide catalyst according to claim 9, wherein the auxiliary complexing agent comprises a compound prepared by ring-opening polymerization of a cyclic ether compound, an epoxy polymer or an oxetane polymer.

**11.** A method for preparing a double metal cyanide catalyst, the method comprising:

(a) a step of reacting a metal salt aqueous solution comprising a complexing agent and a metal cyanide complex aqueous solution;
(b) a step of separating a precipitate from a suspension obtained in step (a);
(c) a step of washing the precipitate with the complexing agent; and

(d) a step of drying the precipitate obtained in step (C) at a temperature of 20°C to 180°C, wherein the complexing agent is a compound represented by the following Formula 1:

[Formula 1]

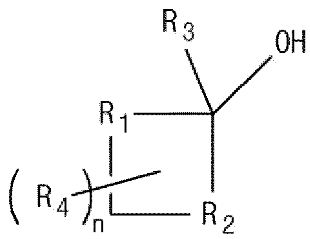

in Formula 1,
$R_1$ and $R_2$ are each independently a single bond or an alkylene group of 1 to 5 carbon atoms, where at least one among $R_1$ and $R_2$ is an alkylene group of 1 to 5 carbon atoms,
$R_3$ and $R_4$ are each independently a hydrogen atom or an alkyl group of 1 to 6 carbon atoms, and
n is an integer of 0 to 2.

**12.** The method for preparing a double metal cyanide catalyst according to claim 11, wherein the reaction in step (a) is performed by further using an auxiliary complexing agent, and
the auxiliary complexing agent is a compound having a hydroxyl group, an amine group, an ester group or an ether group at a terminal.

**13.** A method for preparing polyalkylene carbonate, the method comprising a step of polymerizing an epoxide compound and carbon dioxide in the presence of the double metal cyanide catalyst according to claim 1.

**14.** The method for preparing polyalkylene carbonate according to claim 13, wherein the polymerization is performed at a temperature of 50°C to 120°C.

## Patentansprüche

**1.** Doppelmetallcyanidkatalysator, umfassend eine Doppelmetallcyanidverbindung und einen Komplexbildner, wobei

der Komplexbildner eine Verbindung ist, die durch die folgende Formel 1 dargestellt ist:

[Formel 1]

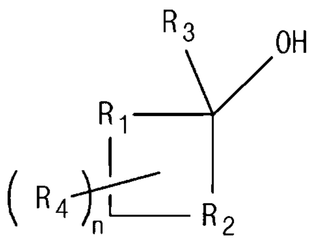

wobei in Formel 1
$R_1$ und $R_2$ jeweils unabhängig eine Einfachbindung oder eine Alkylengruppe mit 1 bis 5 Kohlenstoffatomen sind, wobei mindestens eines von $R_1$ und $R_2$ eine Alkylengruppe mit 1 bis 5 Kohlenstoffatomen ist,
$R_3$ und $R_4$ jeweils unabhängig ein Wasserstoffatom oder eine Alkylgruppe mit 1 bis 6 Kohlenstoffatomen sind, und
n eine ganze Zahl von 0 bis 2 ist.

**2.** Doppelmetallcyanidkatalysator nach Anspruch 1, wobei
in Formel 1

$R_1$ und $R_2$ jeweils unabhängig eine Einfachbindung oder eine Alkylengruppe mit 1 bis 3 Kohlenstoffatomen sind, wobei mindestens eines von $R_1$ und $R_2$ eine Alkylengruppe mit 1 bis 3 Kohlenstoffatomen ist,
$R_3$ und $R_4$ jeweils unabhängig ein Wasserstoffatom oder eine Alkylgruppe mit 1 bis 4 Kohlenstoffatomen sind, und n eine ganze Zahl von 0 bis 2 ist.

3. Doppelmetallcyanidkatalysator nach Anspruch 1, wobei die durch Formel 1 dargestellte Verbindung eine oder mehrere ist, ausgewählt aus der Gruppe, bestehend aus Cyclobutanol, Cyclopentanol, Cyclohexanol, Cycloheptanol, Cyclooctanol, 1-Methylcyclopentanol, 2-Methylcyclopentanol, 3-Methylcyclopentanol, 1-Ethylcyclopentanol, 2-Ethylcyclopentanol, 3-Ethylcyclopentanol, 1-Propylcyclopentanol, 2-Propylcyclopentanol, 3-Propylcyclopentanol, 1-Butylcyclopentanol, 2-Butylcyclopentanol, 3-Butylcyclopentanol, 1-Isopropylcyclopentanol, 2-Isopropylcyclopentanol, 3-Isopropylcyclopentanol, 1-(Propan-2-yl)cyclopentanol, 2,2-Dimethylcyclopentanol, 2,3-Dimethylcyclopentanol, 3,3-Dimethylcyclopentanol, 1,2-Dimethylcyclopentanol, 1,3-Dimethylcyclopentanol, 1-Methylcyclohexanol, 1-Ethylcyclohexanol, 1-Propylcyclohexanol, 1-Butylcyclohexanol, 2-Methyl-1-cyclohexanol, 2-Ethyl-1-cyclohexanol, 3-Ethyl-1-cyclohexanol, 4-Ethyl-1-cyclohexanol, 2-Propyl-1-cyclohexanol, 3-Propyl-1-cyclohexanol, 4-Propyl-1-cyclohexanol, 2-Butyl-1-cyclohexanol, 3-Butyl-1-cyclohexanol, 4-Butyl-1-cyclohexanol, 2-Isopropyl-1-cyclohexanol, 3-Isopropyl-1-cyclohexanol, 4-Isopropyl-1-cyclohexanol, 2-tert-Butyl-1-cyclohexanol, 3-tert-Butyl-1-cyclohexanol, 4-tert-Butyl-1-cyclohexanol, 2,3-Dimethyl-1-cyclohexanol, 2,4-Dimethyl-1-cyclohexanol, 3,4-Dimethyl-1-cyclohexanol, 1-Methylcycloheptanol, 2-Methylcycloheptanol, 3-Methylcycloheptanol und 4-Methylcycloheptanol.

4. Doppelmetallcyanidkatalysator nach Anspruch 1, wobei die Doppelmetallcyanidverbindung von einem Metallcyanidkomplex und einem Metallsalz abgeleitet ist.

5. Doppelmetallcyanidkatalysator nach Anspruch 4, wobei der Metallcyanidkomplex Kaliumhexacyanocobaltat(III), Kaliumhexacyanoferrat(II), Kaliumhexacyanoferrat(III), Calciumhexacyanoferrat(III) oder Lithiumhexacyanoiridat(III) ist.

6. Doppelmetallcyanidkatalysator nach Anspruch 4, wobei der Metallcyanidkomplex Kaliumhexacyanocobaltat(III) ist.

7. Doppelmetallcyanidkatalysator nach Anspruch 4, wobei das Metallsalz eines oder mehrere ist, ausgewählt aus der Gruppe, bestehend aus Zink(II)chlorid, Zink(III)chlorid, Zinkbromid, Zinkiodid, Zinkacetat, Zinkacetylacetonat, Zinkbenzoat, Zinknitrat, Eisen(II)sulfat, Eisen(II)bromid, Cobalt(II)chlorid, Cobalt(II)thiocyanat, Nickel(II)formiat und Nickel(II)nitrat.

8. Doppelmetallcyanidkatalysator nach Anspruch 4, wobei das Metallsalz Zink(II)chlorid, Zink(III)chlorid, Zinkbromid und Zinkiodid ist.

9. Doppelmetallcyanidkatalysator nach Anspruch 1, ferner umfassend einen Hilfskomplexbildner, wobei der Hilfskomplexbildner eine Verbindung mit einer Hydroxylgruppe, einer Amingruppe, einer Estergruppe oder einer Ethergruppe an einem Ende ist.

10. Doppelmetallcyanidkatalysator nach Anspruch 9, wobei der Hilfskomplexbildner eine Verbindung umfasst, die durch Ringöffnungspolymerisation einer cyclischen Etherverbindung, eines Epoxypolymers oder eines Oxetanpolymers hergestellt ist.

11. Verfahren zur Herstellung eines Doppelmetallcyanidkatalysators, wobei das Verfahren umfasst:

(a) einen Schritt des Umsetzens einer wässrigen Metallsalzlösung, die einen Komplexbildner umfasst, und einer wässrigen Metallcyanidkomplexlösung;
(b) einen Schritt des Abtrennens eines Präzipitats von einer in Schritt (a) erhaltenen Suspension;
(c) einen Schritt des Waschens des Präzipitats mit dem Komplexbildner; und
(d) einen Schritt des Trocknens des in Schritt (C) erhaltenen Präzipitats bei einer Temperatur von 20 °C bis 180 °C, wobei
der Komplexbildner eine Verbindung ist, die durch die folgende Formel 1 dargestellt ist:

[Formel 1]

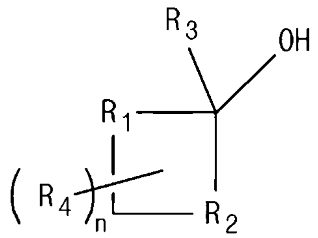

wobei in Formel 1
$R_1$ und $R_2$ jeweils unabhängig eine Einfachbindung oder eine Alkylengruppe mit 1 bis 5 Kohlenstoffatomen sind, wobei mindestens eines von $R_1$ und $R_2$ eine Alkylengruppe mit 1 bis 5 Kohlenstoffatomen ist,
$R_3$ und $R_4$ jeweils unabhängig ein Wasserstoffatom oder eine Alkylgruppe mit 1 bis 6 Kohlenstoffatomen sind, und
n eine ganze Zahl von 0 bis 2 ist.

**12.** Verfahren zur Herstellung eines Doppelmetallcyanidkatalysators nach Anspruch 11, wobei die Reaktion in Schritt (a) durchgeführt wird, indem ferner ein Hilfskomplexbildner verwendet wird, und
der Hilfskomplexbildner eine Verbindung mit einer Hydroxylgruppe, einer Amingruppe, einer Estergruppe oder einer Ethergruppe an einem Ende ist.

**13.** Verfahren zur Herstellung von Polyalkylencarbonat, wobei das Verfahren einen Schritt des Polymerisierens einer Epoxidverbindung und Kohlendioxid in Gegenwart des Doppelmetallcyanidkatalysators nach Anspruch 1 umfasst.

**14.** Verfahren zur Herstellung von Polyalkylencarbonat nach Anspruch 13, wobei die Polymerisation bei einer Temperatur von 50 °C bis 120 °C durchgeführt wird.

## Revendications

**1.** Catalyseur de cyanure métallique double comprenant un composé de cyanure métallique double et un agent complexant, dans lequel

l'agent complexant est un composé représenté par la Formule 1 ci-après :

[Formule 1]

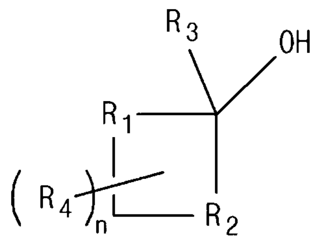

dans la Formule 1,
$R_1$ et $R_2$ sont chacun indépendamment une liaison simple ou un groupe alkylène de 1 à 5 atomes de carbone, où au moins soit $R_1$ soit $R_2$ est un groupe alkylène de 1 à 5 atomes de carbone,
$R_3$ et $R_4$ sont chacun indépendamment un atome d'hydrogène ou un groupe alkyle de 1 à 6 atomes de carbone, et
n est un nombre entier de 0 à 2.

**2.** Catalyseur de cyanure métallique double selon la revendication 1, dans lequel,
dans la Formule 1,

$R_1$ et $R_2$ sont chacun indépendamment une liaison simple ou un groupe alkylène de 1 à 3 atomes de carbone, où au moins soit $R_1$ soit $R_2$ est un groupe alkylène de 1 à 3 atomes de carbone,

$R_3$ et $R_4$ sont chacun indépendamment un atome d'hydrogène ou un groupe alkyle de 1 à 4 atomes de carbone, et n est un nombre entier de 0 à 2.

3. Catalyseur de cyanure métallique double selon la revendication 1, dans lequel le composé représenté par la Formule 1 est un ou plusieurs éléments sélectionnés dans le groupe constitué de cyclobutanol, cyclopentanol, cyclohexanol, cycloheptanol, cyclooctanol, 1-méthylcyclopentanol, 2-méthylcyclopentanol, 3-méthylcyclopentanol, 1-éthylcyclopentanol, 2-éthylcyclopentanol, 3-éthylcyclopentanol, 1-propylcyclopentanol, 2-propylcyclopentanol, 3-propylcyclopentanol, 1-butylcyclopentanol, 2-butylcyclopentanol, 3-butylcyclopentanol, 1-isopropylcyclopentanol, 2-isopropylcyclopentanol, 3-isopropylcyclopentanol, 1-(propan-2-yl) cyclopentanol, 2,2-diméthylcyclopentanol, 2,3-diméthylcyclopentanol, 3,3-diméthylcyclopentanol, 1,2-diméthylcyclopentanol, 1,3-diméthylcyclopentanol, 1-méthylcyclohexanol, 1-éthylcyclohexanol, 1-propylcyclohexanol, 1-butylcyclohexanol, 2-méthyl-1-cyclohexanol, 2-éthyl-1-cyclohexanol, 3-éthyl-1-cyclohexanol, 4-éthyl-1-cyclohexanol, 2-propy-1-cyclohexanol, 3-propyl-1-cyclohexanol, 4-propyl-1-cyclohexanol, 2-butyl-1-cyclohexanol, 3-butyl-1-cyclohexanol, 4-butyl-1-cyclohexanol, 2-isopropyl-1-cyclohexanol, 3-isopropyl-1-cyclohexanol, 4-isopropyl-1-cyclohexanol, 2-tert-butyl-1-cyclohexanol, 3-tert-butyl-1-cyclohexanol, 4-tert-butyl-1-cyclohexanol, 2,3-diméthyl-1-cyclohexanol, 2,4-diméthyl-1-cyclohexanol, 3,4-diméthyl-1-cyclohexanol, 1-méthylcycloheptanol, 2-méthylcycloheptanol, 3-méthylcycloheptanol et 4-méthylcycloheptanol.

4. Catalyseur de cyanure métallique double selon la revendication 1, dans lequel le composé de cyanure métallique double est dérivé d'un complexe de cyanure métallique et d'un sel métallique.

5. Catalyseur de cyanure métallique double selon la revendication 4, dans lequel le complexe de cyanure métallique est hexacyanocobaltate(III) de potassium, hexacyanoferrate(II) de potassium, hexacyanoferrate(III) de potassium, hexacyanoferrate(III) de calcium ou hexacyanoiridate(III) de lithium.

6. Catalyseur de cyanure métallique double selon la revendication 4, dans lequel le complexe de cyanure métallique est hexacyanocobaltate(III) de potassium.

7. Catalyseur de cyanure métallique double selon la revendication 4, dans lequel le sel métallique est un ou plusieurs éléments sélectionnés dans le groupe constitué de chlorure de zinc(II), chlorure de zinc(III), bromure de zinc, iodure de zinc, acétate de zinc, acétylacétonate de zinc, benzoate de zinc, nitrate de zinc, sulfate de fer(II), bromure de fer(II), chlorure de cobalt(II), thiocyanate de cobalt(II), formate de nickel(II) et nitrate de nickel(II).

8. Catalyseur de cyanure métallique double selon la revendication 4, dans lequel le sel métallique est un chlorure de zinc(II), chlorure de zinc(III), bromure de zinc et iodure de zinc.

9. Catalyseur de cyanure métallique double selon la revendication 1, comprenant en outre un agent complexant auxiliaire, dans lequel
l'agent complexant auxiliaire est un composé ayant un groupe hydroxyle, un groupe amine, un groupe ester ou un groupe éther à un terminal.

10. Catalyseur de cyanure métallique double selon la revendication 9, dans lequel l'agent complexant auxiliaire comprend un composé préparé par polymérisation par ouverture de cycle d'un composé d'éther cyclique, un polymère époxy ou un polymère oxétane.

11. Procédé de préparation d'un catalyseur de cyanure métallique double, le procédé comprenant :

(a) une étape consistant à faire réagir une solution aqueuse de sel métallique comprenant un agent complexant et une solution aqueuse de complexe de cyanure métallique ;
(b) une étape consistant à séparer un précipité d'une suspension obtenue à l'étape (a) ;
(c) une étape consistant à laver le précipité avec l'agent complexant ; et
(d) une étape consistant à sécher le précipité obtenu à l'étape (C) à une température de 20°C à 180°C, dans lequel l'agent complexant est un composé représenté par la Formule 1 ci-après :

[Formule 1]

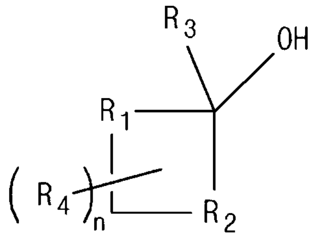

dans la Formule 1,
$R_1$ et $R_2$ sont chacun indépendamment une liaison simple ou un groupe alkylène de 1 à 5 atomes de carbone, où au moins soit $R_1$ soit $R_2$ est un groupe alkylène de 1 à 5 atomes de carbone,
$R_3$ et $R_4$ sont chacun indépendamment un atome d'hydrogène ou un groupe alkyle de 1 à 6 atomes de carbone, et n est un nombre entier de 0 à 2.

**12.** Procédé de préparation d'un catalyseur de cyanure métallique double selon la revendication 11, dans lequel la réaction à l'étape (a) est effectuée en utilisant en outre un agent complexant auxiliaire, et
l'agent complexant auxiliaire est un composé ayant un groupe hydroxyle, un groupe amine, un groupe ester ou un groupe éther à un terminal.

**13.** Procédé de préparation du carbonate de polyalkylène, le procédé comprenant une étape consistant à polymériser un composé d'époxyde et un dioxyde de carbone en présence du catalyseur de cyanure métallique double selon la revendication 1.

**14.** Procédé de préparation du carbonate de polyalkylène selon la revendication 13, dans lequel la polymérisation est effectuée à une température de 50°C à 120°C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020130102588 A
- US 2016152651 A
- US 2013184432 A1